# EUROPEAN PATENT APPLICATION

(11) **EP 1 353 142 A1**
(43) Date of publication of application: **15.10.2003**
(21) Application number: 03075895.7
(22) Date of filing: 28.03.2003
(51) Int. Cl.: G01B 11/04, G01B 11/02, G01B 11/00

(54) **Device for measuring the length of stacked objects**

(30) Priority: 09.04.2002 BE 200200253
(71) Applicant: CSP Engineering en Machinebouw, 2470 Retie (BE)
(72) Inventor: Peeters, Jan, 2470 Retie (BE)
(74) Representative: Donné, Eddy

(57) **Abstract**

The present invention concerns a device for measuring the length of stacked objects having the same thickness, comprising a transport equipment (1) with a movable bearing surface (7A) to transport a pile of objects (10), means (2) for measuring the conveying distance of this transport equipment (1), a number of optical sensors (3) which are provided on a support (4) at equal distances from one another, at right angles to the bearing surface (7A), whereby the gradient of the support (4) in relation to the bearing surface (7A) can be adjusted, and a processing unit (5) to calculate the length of an object on the basis of the conveying distance measured with said means (2) and the detection of said object by one of the sensors.

## Description

The present invention concerns a device for measuring the length of stacked objects, elongated objects having the same thickness, but possibly a different length.

In particular, the invention concerns the measuring of the length of wooden laths, for example for wooden floors.

As sawing the laths to the same length implies a loss of wood, this working method is still but little applied. This means that, in a pile of laths to be packed together, the length of one lath is usually different in relation to that of another one.

The cost price of massive wood is rather high, and the price of the bundle depends on the total amount of wood. The laths in the pile have the same thickness and a width that is known or measured, so that, in order to calculate the amount of wood, only the length remains to be measured.

The laths of the pile are normally stacked and carried to a packaging machine on a transport device, where they are tied together or packed in foil. It is possible to measure the lengths during this transport.

No devices are known until now which make it possible to measure this length automatically, so that, if one wishes to know the exact amount of material of the objects in a pile in order to calculate the correct amount of material, the length has to be measured manually, which is time-consuming of course.

A problem when automating the measurement is that, although the thickness of all the objects in a pile is practically the same, it is sometimes required to measure piles of objects having different thicknesses.

The invention aims a device which makes it possible to measure the length of stacked objects in a fast and simple manner, and such for different thicknesses of the stacked objects.

According to the invention, said device to this end comprises a transport equipment with a movable bearing surface to convey a pile of objects, means for measuring the conveying distance of this transport equipment, a number of optical sensors which are provided on a support at equal distances from one another, at right angles to the bearing surface, and which are directed diagonally to the direction of movement of the transport equipment, whereby the gradient of the support in relation to the bearing surface can be adjusted, and a processing unit to calculate the length of an object on the basis of the measured conveying distance and the detection of said object by one of the sensors.

By adjusting the gradient, the vertical distance between the optical sensors can be adjusted, so that the sensors can be set such that they are directed opposite to the centre of the edges of the objects in case of varying thicknesses.

The support is preferably elongated and with a far end that is hinge-mounted around an axis at the height of the bearing surface of the transport equipment upon which the pile is conveyed.

This hinge-mounted far end can be shifted over a support extending along the transport equipment, while the other far end of the support can thereby be hinge-mounted to at least one adjusting element which can slide over and can be blocked on at least one vertical guide protruding above the transport equipment.

The optical sensors preferably each consist of a transmitter part on a first part of the support and of a receiver part on a second part of the support situated opposite to the latter.

In order to better explain the characteristics of the invention, the following preferred embodiment of a device for measuring the length of stacked objects according to the invention is described as an example only without being limitative in any way, with reference to the accompanying drawings, in which:
figure 1 schematically represents a front view of a measuring device according to the invention while measuring a pile of boards;
figure 2 represents the part indicated with F2 in figure 1 to a larger scale;
figure 3 represents a section according to line III-III in figure 1, drawn to a larger scale;
figure 4 represents the part indicated with F4 in figure 3 to a larger scale;
figure 5 schematically represents a front view analogous to that in figure 1, but while measuring a pile of boards having another thickness;
figure 6 represents a variant of figure 2.

The measuring device represented in the figures mainly consists of a transport equipment 1, means 2 for measuring the conveying distance of this transport equipment 1, a number of optical sensors 3 erected on a support 4 and a processor or processing unit 5.

The transport equipment 1 consists of a frame 6 and an endless conveyor belt 7 mounted upon it which is guided over rollers 8, one of which is driven by means of a motor 9. The top part of the frame 6 forms a horizontal table 6A supporting the top part 7A of the conveyor belt 7. This top part 7A forms the bearing surface for the pile of wooden boards 10.

The means 2 for measuring the conveyor distance are formed of an incremental pulse generator which is connected to the driven roller 8 and which generates a pulse each time this roller 8 is rotated over a certain small angle. This pulse generator has a built-in counter which continuously counts the number of generated pulses. This pulse generator is electrically connected to the processing unit 5.

The optical sensors 3 are photocells of the type having a transmitter part 3A and a receiver part 3B situated opposite to it. These sensors must be of the type which switch rapidly at each transition from light to dark or vice versa, with an operating distance of at least 30 cm, and which are relatively insensitive to dust and surrounding light.

The transmitter parts 3A and the receiver parts 3B are electrically connected to the processing unit 5.

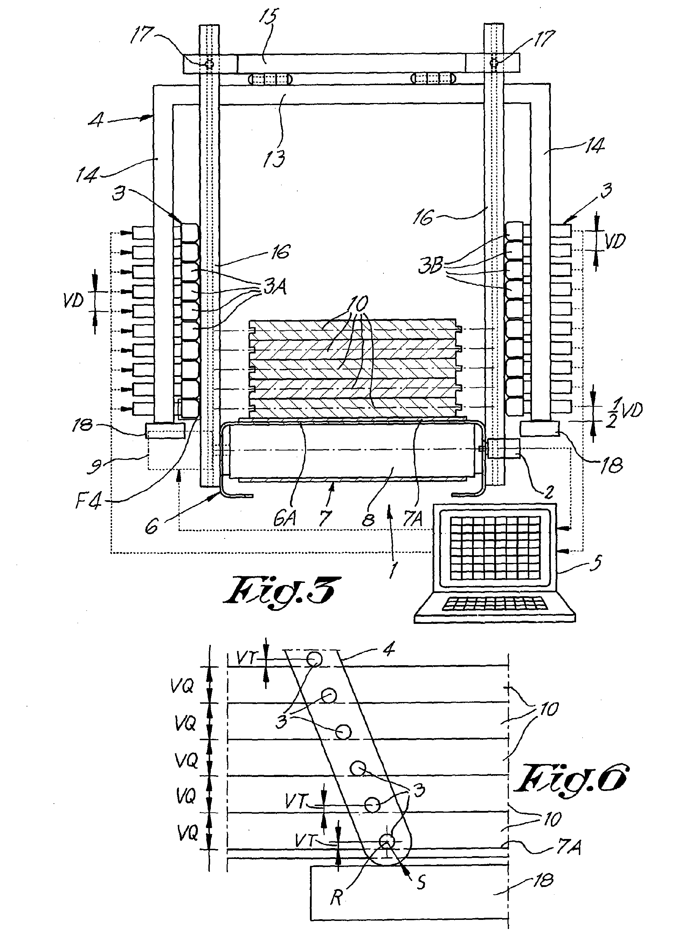

Since the thickness of the boards 10 to be measured can be relatively small, so that the sensors 3 are erected very close to one another, the light beam of the optical sensors 3 should be very thin and concentrated so as to avoid interference with other optical sensors. To this end, a head 11 is provided at the far end of the exit of each transmitter part 3A and at the far end of the input of each receiver part 3B, provided with a thin duct 12 to guide the light beam, as is represented in detail in figure 4.

The support 4 which is mainly U-shaped consists of a horizontal central part 13 which is directed diagonally to the top part 7A of the conveyor belt 7, at a distance thereof, and of two parts connected thereto on the far ends of said central part 13, formed of legs 14 extending downward on either side of the part 7A.

The central part 13 is hinge-mounted to an adjusting element 15 directed parallel to it which can slide up and down over two vertical, rod-shaped guides 16 erected next to the conveyor belt 7 on the frame 6. By means of clamping screws 17, screwed in the adjusting element 15, the central part 13 can be clamped on the guides at the required height, and thus the central part 13 can be blocked in height.

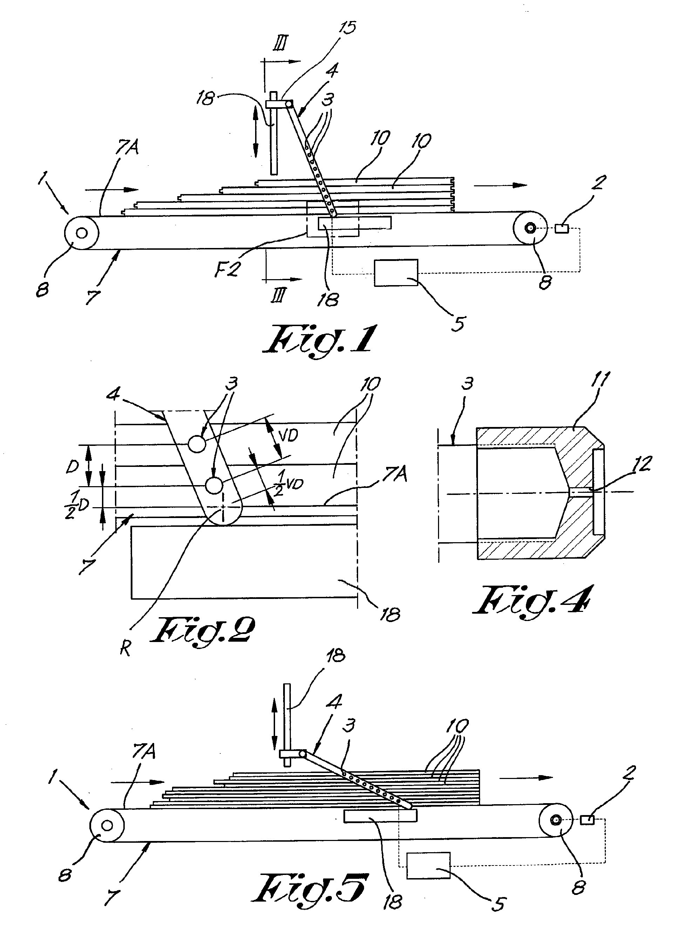

With their free ends, which are circularly rounded, the two parallel legs 14 rest on two horizontal supports 18 which are fixed on the frame 6 on either side of the conveyor belt 7, at such a distance under the top part 7A that the centre of the circular rounding is situated at the height of the top side of this top part 7A, as is represented in detail in figure 2. These far ends can be moved in the longitudinal direction of the belt part 7A.

The centre of the rounded end of each leg 14 forms the theoretical hinge point R around which said leg 14 pivots, which hinge point can be shifted in the longitudinal direction of the part 7A and thus in the conveying direction of the boards 10.

The transmitter parts 3A or the receiver parts 3B are provided in a row at equal distances D from one another on the sides of the legs 14 facing one another. By 'distance' is to be strictly understood here the distance between the centre lines of said parts 3A and 3B, i.e. the centre lines of the light beams emitted by the transmitter parts 3A.

The distance VD, seen at right angles to the bearing surface of the boards 10, i.e. at right angles to the part 7A of the conveyor belt 7, between said transmitter parts 3A or receiver parts 3B is the same as well, but it depends on the gradient of the legs 14. This vertical distance VD is equal to the thickness of the boards 10.

The lower transmitter part 3A and the lower receiver part 3B are situated half-way at said distance D from the centre of the rounded ends, and thus half-way at said vertical distance VD in the vertical direction.

The working of the device is as follows:

By moving the adjusting element 15 over the guides 16, the gradient of the legs 14 of the support 4 is adjusted such that the vertical distance VD between two neighbouring transmitter parts 3A, and thus also between two neighbouring receiver parts 3B, corresponds to the thickness of the boards 10 to be measured. The lower ends of the legs 14 thereby shift over the supports 18. When the right gradient is obtained, the adjusting element 15 is blocked on the guides 16 by means of the clamping screws 17.

A pile of boards 10 is placed on the top part 7A of the conveyor belt 7 and, when the motor 9 is operational, it is conveyed between the legs 14 of the support 4 by the conveyor belt 7. Opposite to the centre point of the thickness of each board 10 there is a sensor 3.

When a sensor 3 detects its board 10, i.e. when the light beam emitted by its transmitter part 3A is interrupted by the board 10, so that the receiver part 3B suddenly no longer detects a light beam, this information is transmitted to the processing unit 5, which immediately stores the value of the pulse generator's counter, of the means 2, in its memory.

As soon as the board 10 concerned has just passed the sensor 3, and the receiver part 3B consequently detects a light beam again, this is transmitted to the processing unit 5, which now stores the new value of the pulse generator's counter.

The processing unit 5 calculates the difference between the two counter values, which is directly proportional to the distances covered by the board 10, and thus provides a measure for its length. After multiplication with a conversion factor, the length of the board 10 is obtained.

When all the boards 10 of the pile have passed the sensors 3, the processing unit 5 will have calculated the lengths of each of the boards 10 individually.

By multiplying this with the known or possibly measured width of each board, the processing unit calculates the surface area of each board 10. By adding everything up, the entire wood surface of the pile of boards 10 is calculated. Since the thickness of the boards 10 is known, a measure for the volume is obtained thanks to this surface area. By inputting the price per volume unit, it is further possible to calculate the cost price, which can then be sent to a labelling machine so as to be printed on a label.

Thus, by means of the above-described device, the individual length of stacked objects can be measured in a simple and fast manner, for different thicknesses of these objects, in so far that all the objects have the same thickness. Figure 5 represents the device while measuring the length of boards 10 with a smaller thickness, whereby the legs 14 thus have a smaller gradient than in the device represented in figures 1 to 4.

The objects must not necessarily be wooden boards.

The gradient of the support 4 can also be adjusted in other ways than described above. Said U-shaped support 7, instead of being hinge-mounted to an adjusting element 15, can be hinge-mounted around pivoting axes R in the centre of the rounded far ends of the legs 14, while the centre part 13 can then possibly be shifted over a guide in the transport equipment of the part 7A of the conveyor belt 7.

Not all the transmitter parts 3A must be necessarily provided on the one leg 14, and the receiver parts 3B on the other leg. On each leg 14 can for example be alternately provided a transmitter part 3A and a receiver part 3B, whereby a transmitter part 3A must always be situated on a leg 14 opposite to a receiver part 3B on the other leg 14, however.

According to a variant, the optical sensors 3 are laser diodes instead of photocells with a transmitter part 3A and a receiver part 3B. They may also be of the type using the reflection of the beams, and whereby the transmitter part and the receiver part of a sensor are thus provided in one and the same housing. In the latter case, the support 5 must only have one leg 14.

Figure 6 represents another variant of the embodiment from figure 2.

In this set-up, the optical sensors 3 are mounted on a support 4 which is circular at the bottom, having a radius S, whereby the centre R of this radius S is situated in the centre of the lower measuring cell 3.

The support 4 rests on the horizontal supports 18 with the rounding of the radius S.

The supports 18 are adjusted such that the lower measuring cell 3 is situated at a fixed distance VT from the bearing surface 7A.

For each board thickness VQ, an angular setting of the support 4 is possible whereby each measuring cell 3 is situated at a fixed distance VT in relation to the lower side of the corresponding board 10.

The length of each board or every layer is hereby measured at a fixed distance VT in relation to the lower side of each board or layer.

According to a variant, means are added to the device to measure the width of the objects individually, such that the objects in the pile must not necessarily have the same width. To this end, the device comprises a stop erected above the conveyor belt 7 and against which the boards 10 lie with one side during their conveyance. Said means for measuring the width may be of a known construction and may be formed for example of feelers ending up against the boards on the other side.

The invention is by no means limited to the above-described embodiment represented in the accompanying drawings; on the contrary, such a device for measuring stacked objects can be made in all sorts of variants while still remaining within the scope of the invention.

## Claims

1. Device which makes it possible to measure the length of objects in a pile of elongated objects (10) having the same thickness, but possibly different lengths, **characterised in that** it comprises a transport equipment (1) with a movable bearing surface (7A) to transport a pile of objects (10), means (2) for measuring the conveying distance of this transport equipment (1), a number of optical sensors (3) which are provided on a support (4) at equal distances (VD) from one another, at right angles to the bearing surface (7A), and which are directed diagonally to the direction of movement of the transport equipment (1), whereby the gradient of the support (4) in relation to the bearing surface (7A) can be adjusted, and a processing unit (5) to calculate the length of an object on the basis of the measured conveying distance and the detection of said object by one of the sensors.

2. Device according to claim 1, **characterised in that** the support (4) is elongated and hinge-mounted around an axis (R ) with one far end at the height of the bearing surface (7A) of the transport equipment (1) upon which the pile is conveyed.

3. Device according to claim 2, **characterised in that** the distance (A) between the first optical sensor (3) on the support (4) and the axis (R ) around which said support (4) is hinge-mounted at the height of the bearing surface (7A) of the transport equipment (1) is equal to half the mutual distance (VD) between the sensors (3).

4. Device according to claim 2, **characterised in that** the first or optical sensor (3) is situated in the axis (R3) around which the support (4) can pivot at the height of the bearing surface (7A) of the transport equipment (1).

5. Device according to claim 2, 3 or 4, **characterised in that** the pivoting far end can shift over a support (18) extending along the transport equipment (1), while the other far end of the support (4) is hinge-mounted to at least one adjusting element (15) which can shift over and can be blocked on at least one vertical guide (16) protruding above the transport equipment (1).

6. Device according to any of claims 2 to 5, **characterised in that** the optical sensors (3) are photocells whereby both the transmitter parts (3A) as well as the receiver parts (3B) have a head (11) provided with a duct (12) for the concentration of their light beam.

7. Device according to any of the preceding claims, **characterised in that** the sensors (3) are erected in a single row.

8. Device according to any of the preceding claims, **characterised in that** the optical sensors (3) each consist of a transmitter part (3A) on a first part (14) of the support (4) and a receiver part (3B) situated opposite to it on a second part (14) of the support (4).

9. Device according to claim 8, **characterised in that** the support (4) is U-shaped and has a central part (13) and two parallel legs (14) upon which the transmitter parts (3A) and the receiver parts (3B) are provided opposite to one another.

10. Device according to claims 5 and 9, **characterised in that** the far ends of the legs (14) are circularly rounded and can each be moved over a support (18), whereby the centre of the rounded ends forms the moveable pivoting axis (R ) of the support (4).

11. Device according to any of the preceding claims, **characterised in that** the transport equipment (1) contains an endless conveyor belt (7) which is guided over rollers (8), and **in that** the means (2) for measuring the conveying distance of this transport equipment (1) comprise an incremental pulse generator which is connected to one of said rollers (8) and preferably comprises a pulse counter.
